# FASCICULE DE BREVET EUROPEEN

(11) **EP 0 439 379 B1**
(45) Date de publication et mention de la délivrance du brevet: **20.10.1993**
(21) Numéro de dépôt: 91400028.6
(22) Date de dépôt: 09.01.1991
(51) Int. Cl.: F16D 3/04

(54) **Lien élastique entre un arbre moteur et un arbre récepteur**
Elastische Verbindung zwischen einer treibenden und einer getriebenen Welle
Elastic joint between a driving and a driven shaft

(30) Priorité: 25.01.1990 FR 9000869
(43) Date de publication de la demande: 31.07.1991
(73) Titulaire: GIAT INDUSTRIES SOCIETE ANONYME, F-78034 Versailles Cédex (FR)
(72) Inventeur: Blin, André, F-18500 Mehun sur Yevre (FR); Philipot, Maurice, F-18570 La Chapelle Saint Ursin (FR); Bonnet, Alain, F-18000 Bourges (FR)
(74) Mandataire: Célanie, Christian

(56) Documents cités:
- EP-A- 0 114 895
- DE-A- 3 438 718
- DE-A- 3 543 025
- GB-A- 388 961

## Description

Le secteur technique de la présente invention est celui des moyens de liaison entre un arbre moteur et un arbre récepteur.

Dans le brevet FR2623898, on a déjà proposé des moyens de liaison entre un arbre moteur et un arbre récepteur constitué ici par une ailette. Ceux ci sont constitués par un joint homocinétique, par exemple un joint de Oldham, et permettent de tolérer un défaut d'alignement axial.

Cependant un tel joint ne permet pas d'obtenir une liaison sans jeux.

Le brevet EP114895 décrit un joint de Oldham comportant deux prolongements solidaires d'un disque et qui ont des orientations orthogonales l'un de l'autre.

Ces prolongements sont fendus et viennent se positionner dans des logements complémentaires aménagés sur les axes du moteur et du récepteur. Chacune des branches qui constitue un prolongement vient en appui élastique sur les parois du logement ce qui permet d'annuler les jeux sans perturber la transmission du couple; en effet, dans une telle configuration ce dernier n'a pas pour effet de rapprocher les branches des prolongements.

Un tel joint présente pour principal inconvénient d'être encombrant axialement.

Le document GB388961 décrit un dispositif assurant la transmission d'un couple entre la motorisation d'une locomotive et les roues, et qui est constitué par un élément de liaison comportant deux bras symétriques et un logement dont l'orientation est sensiblement normale à celle des bras.

Ce dispositif autorise des mouvements relatifs limités de l'axe des roues par rapport à celui de la motorisation suivant les deux directions normales ainsi définies par l'élément de liaison. Mais un tel dispositif conçu pour la mécanique ferroviaire est mal adapté à un emploi en mécanique de précision en raison d'une part des difficultés qu'il y a à obtenir des tolérances assurant une transmision sans jeu et d'autre part de la difficulté de réaliser le montage final en l'absence de jeux.

Le but de la présente invention est de proposer un lien élastique d'encombrement réduit mais permettant de relier sous un couple donné et pour un défaut maximum d'alignement un arbre moteur à un arbre récepteur, ce lien étant apte à communiquer intégralement et fidèlement à l'arbre récepteur tout déplacement angulaire de l'arbre moteur quels que soient le sens de rotation et l'amplitude.

Ainsi l'invention a pour objet un lien élastique reliant un arbre moteur à un arbre récepteur, caractérisé en ce qu'il est constitué d'une embase sensiblement plane engagée dans une empreinte sensiblement de même profil et pratiquée dans l'arbre récepteur, l'embase présentant un logement à l'intérieur duquel est engagé l'arbre moteur, lien élastique comportant d'une part au moins un bras comprenant deux branches, séparées par une fente sensiblement normale au plan de l'embase, une branche au moins étant déformable et assurant un appui constant sur les parois de l'empreinte, et d'autre part au moins une lamelle en appui constant sur l'arbre moteur et obtenue par découpe de l'embase elle-même au voisinage du logement pour en constituer au moins partiellement la surface du logement en contact avec l'arbre moteur, l'ensemble assurant une liaison arbre moteur arbre récepteur sans jeu.

Le lien élastique est tel que la fente séparant les branches ne s'étend pas jusqu'à l'embase elle-même.

Le lien élastique est tel que l'extrémité libre de la lamelle se trouve en retrait par rapport à l'arbre moteur.

Le lien élastique est tel qu'au moins une des branches porte un renflement limitant le rapprochement maximum des branches.

Le lien élastique peut comprendre deux bras placés de part et d'autre de l'embase suivant son axe XX' de symétrie.

Les deux branches peuvent être déformables en rapprochement pour absorber les jeux d'assemblage entre l'arbre récepteur et l'embase.

Le lien élastique peut comprendre deux lamelles élastiques solidaires de l'embase dont les extrémités libres sont placées de part et d'autre de l'axe XX'.

L'embase peut être réalisée à partir d'un acier élastique du type 45S7.

Un avantage de la présente invention réside dans le fait que le lien assure une liaison sans jeu des deux arbres quel que soit leur alignement.

Un autre avantage réside dans la possibilité d'ajuster de façon très précise les caractéristiques du lien en fonction du couple à transmettre.

Un autre avantage réside dans l'encombrement réduit du lien tout en conservant une facilité de montage dans un logement borgne.

D'autres avantages de la présente invention seront mieux compris à la lumière du complément de description qui va suivre d'un mode de réalisation donné à titre d'exemple en relation avec un dessin sur lequel:
- la figure 1 est une coupe du lien selon l'invention,
- la figure 2 montre l'application du lien à une ailette de projectile,

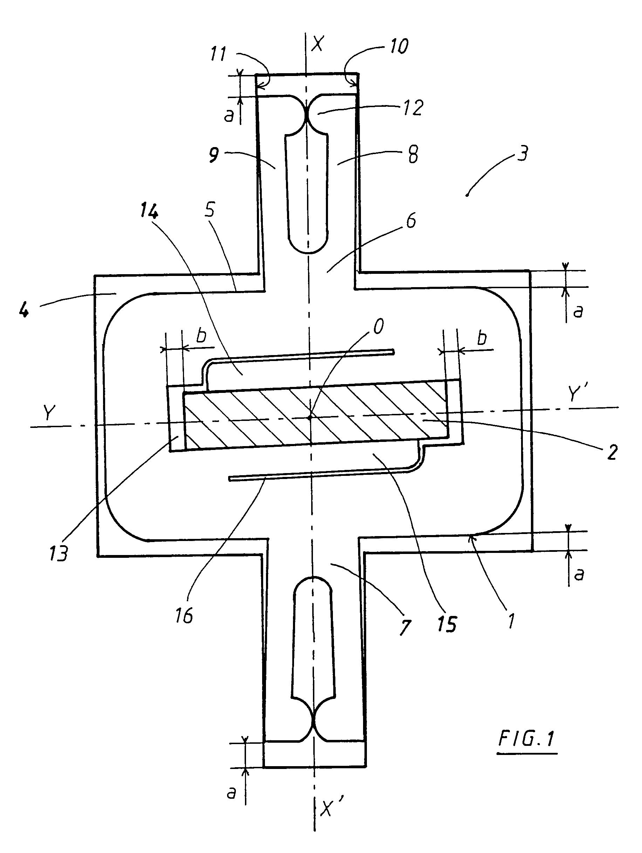

Sur la figure 1, on a représenté le lien 1 destiné à relier un arbre moteur 2 à un arbre récepteur 3. A cette fin, l'arbre 3 est muni d'une empreinte 4 à l'intérieur de laquelle est disposé le lien 1. Celui-ci est constitué par une embase 5, qui est une plaque métallique sensiblement plane, et qui est équipée de moyens de liaison élastiques.

Le premier moyen élastique est constitué par deux bras 6 et 7 solidaires symétriquements de l'embase suivant un axe XX'. Chaque bras comporte deux branches 8 et 9 exerçant sur les parois 10 et 11 de l'empreinte une force continue.

Les bras sont ainsi séparés par une fente qui est sensiblement normale au plan de l'embase et qui ne s'étend pas jusqu'à l'embase 5 elle même.

Chaque branche est munie d'un renflement 12 qui est destiné à limiter le rapprochement maximum de ces dernières.

L'embase a des dimensions telles qu'il existe un jeu de montage (a), entre elle et l'empreinte réalisée dans l'arbre récepteur, suivant la direction de l'axe de symétrie XX'.

Ce jeu permet de compenser les défauts d'alignement de l'arbre récepteur 3.

L'embase 5 comporte un logement 13 sensiblement parallélépipédique, dont la longueur est parallèle à un axe YY' perpendiculaire à l'axe XX'. Ce logement reçoit l'arbre moteur 2, avec un jeu (b) dans une direction parallèle à cet axe YY'', pour compenser les défauts d'alignement de l'arbre moteur.

Les axes XX' et YY' et l'axe de rotation (non représenté) de l'arbre moteur 2 sont sensiblement concourrants au point O.

Dans le logement 13, on prévoit le second moyen élastique constitué ici de deux lamelles 14 et 15, en appui constant sur l'arbre moteur. Ces deux lamelles sont obtenues par une découpe laser dans la masse de l'embase 5, suivant une fente 16 sensiblement normale au plan de l'embase. La largeur de la fente permet de fixer le débattement maximum des lamelles.

Un tel mode d'obtention des lamelles permet d'ajuster précisément la raideur de ces dernières donc le couple qu'elles sont capables de supporter sans fragiliser de façon excessive lamelles et embase.

Ainsi en cas de dépassement d'effort la lamelle viendra en contact avec l'embase et le couple sera transmis sans détérioration du lien.

Sur la figure 1, on voit que l'extrémité libre de la lamelle se trouve en retrait par rapport à l'arbre moteur.

Cette variante de structure permet également d'autoriser les dépassements d'effort sans détériorer les lamelles. L'arbre moteur venant alors en contact avec la paroi restante du logement 13 de l'embase elle-même.

Les lamelles sont calculées dimensionnellement en fonction du couple à transmettre.

Les branches des bras sont également calculées dimensionnellement en fonction du couple à transmettre, mais un dépassement d'effort ne perturbera pas non plus la transmission du mouvement.

En effet à partir d'une certaine amplitude de la flexion des branches, les bras viendront en contact avec les parois de l'empreinte au niveau de la partie du bras qui n'est pas fendue. Cette partie du bras étant prévue suffisamment rigide pour pouvoir transmettre le couple de rotation.

Un dépassement d'effort important pourra avoir également pour effet d'amener les renflements 12 des deux branches en contact mutuel ce qui assurera encore la transmission du couple.

Les limitations en déplacement des lamelles et des bras permettent également de ne pas détériorer le lien par des flexions excessives au cours des opérations de montage.

Ainsi le lien selon l'invention assure une transmission sans jeu du couple de rotation bien que le couple ait une direction telle qu'il agisse sur les moyens élastiques.

Le lien 1 est réalisé de préférence à partir d'un acier à ressort du type 45S7 conférant aux bras 6 et 7 et aux lamelles 14 et 15 une élasticité en rapport avec le couple à transmettre.

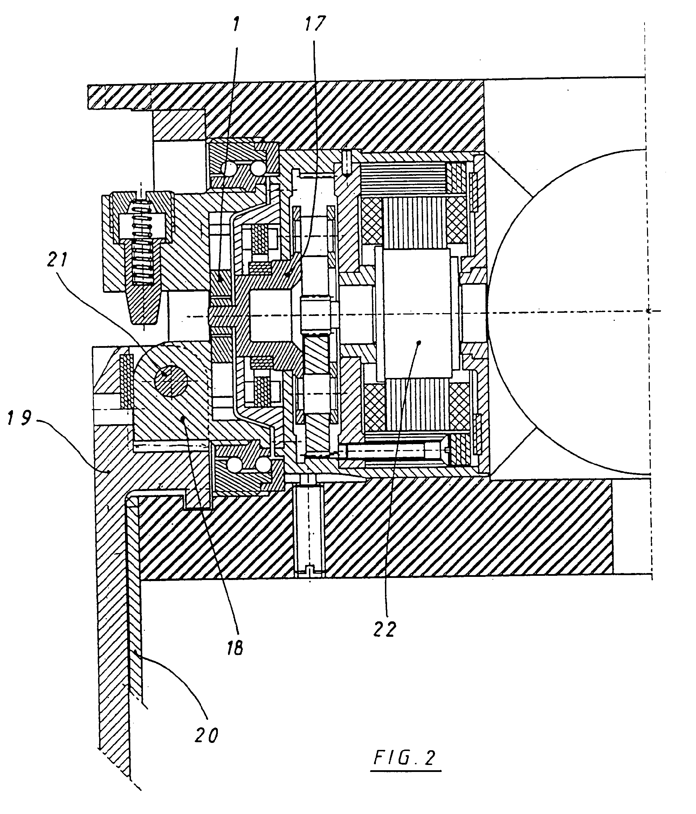

Sur la figure 2, on a représenté une coupe montrant l'intégration du lien 1 entre un arbre moteur 17 et le support 18 d'une ailette 19 représentée en position repliée.

Lorsque le projectile 20 est lancé, les ailettes sont déployées en pivotant autour de l'axe 21. L'arbre 17 entraîné par le moteur 22 assure le pilotage de l'ailette et pour plus de précision sur la structure dessinée sur la figure on pourra se reporter au brevet cité.

## Revendications

1. Lien élastique (1) reliant un arbre moteur (2) à un arbre récepteur (3), ***caractérisé en ce qu'*** il est constitué d'une embase (5) sensiblement plane engagée dans une empreinte (4) sensiblement de même profil et pratiquée dans l'arbre récepteur, l'embase présentant un logement (13) à l'intérieur duquel est engagé l'arbre moteur, lien élastique comportant d'une part au moins un bras (6) comprenant deux branches (8,9), séparées par une fente sensiblement normale au plan de l'embase, une branche au moins étant déformable et assurant un appui constant sur les parois (10,11) de l'empreinte, et d'autre part au moins une lamelle (14, 15) en appui constant sur l'arbre moteur et obtenue par découpe de l'embase elle-même au voisinage du logement (13) pour en constituer au moins partiellement la surface du logement en contact avec l'arbre moteur, l'ensemble assurant une liaison arbre moteur arbre récepteur sans jeu.

2. Lien élastique selon la revendication 1, caractérisé en ce que la fente séparant les branches (8,9) ne s'étend pas jusqu'à l'embase (5) elle-même.

3. Lien élastique selon une des revendications 1 ou 2, caractérisé en ce que l'extrémité libre de la lamelle (14,15) se trouve en retrait par rapport à l'arbre moteur (2).

4. Lien élastique selon une des revendications 1 à 3, caractérisé en ce que au moins une des branches porte un renflement (12) limitant le rapprochement maximum de celles-ci.

5. Lien élastique selon une des revendications 1 à 4, caractérisé en ce qu'il comporte deux bras (6,7) placés de part et d'autre de l'embase suivant son axe XX' de symétrie.

6. Lien élastique selon l'une des revendications 1 à 5, caractérisé en ce que les deux branches (8,9) sont déformables en rapprochement pour absorber les jeux d'assemblage entre l'arbre récepteur et l'embase.

7. Lien élastique selon l'une des revendications 1 à 6, caractérisé en ce qu'il comprend deux lamelles élastiques (14,15) solidaires de l'embase dont les extrémités libres sont placées de part et d'autre de l'axe XX'.

8. Lien élastique selon l'une quelconque des revendications précédentes caractérisé en ce que l'embase (5) est réalisée à partir d'un acier élastique du type 45S7.

## Patentansprüche

1. Elastische Verbindung (1) zwischen einer Antriebswelle (2) und einer Abtriebswelle (3), dadurch gekennzeichnet, daß sie aus einer fast ebenen Fußplatte (5) besteht, die in eine Vertiefung (4) der Abtriebswelle mit entsprechendem Profil gesteckt wird, wobei die Fußplatte eine weitere Vertiefung (13) zur Aufnahme der Antriebswelle aufweist, bestehend aus mindestens einem Arm (6) mit zwei Abzweigungen (8, 9), die auf der Unterseite der Fußplatte durch einen Schlitz getrennt werden, wobei mindestens eine Abzweigung biegsam ist und für ständigen Halt an den Wänden (10, 11) der Vertiefung sorgt, sowie aus mindestens einer Lamelle (14, 15), die ständig mit der Antriebswelle in Kontakt ist und die man durch einen Ausschnitt der Fußplatte selbst in der Nähe der Vertiefung (13) erhält, um daraus zumindest teilweise die Oberfläche der Vertiefung herzustellen, die mit der Antriebswelle in Kontakt ist, wobei die gesamte Vorrichtung eine spielfreie Verbindung zwischen Antriebs- und Abtriebswelle darstellt.

2. Elastische Verbindung gemäß Patentanspruch 1, dadurch gekennzeichnet, daß der Schlitz, der die Abzweigungen (8, 9) trennt, nicht bis zur Fußplatte (5) selbst reicht.

3. Elastische Verbindung gemäß Patentanspruch 1 oder 2, dadurch gekennzeichnet, daß das freie Ende der Lamelle (14, 15) hinter der Antriebswelle (2) liegt.

4. Elastische Verbindung gemäß einem der Patentansprüche 1 bis 3, dadurch gekennzeichnet, daß mindestens eine der Abzweigungen eine Verdickung (12) besitzt, die deren maximale Annäherung einschränkt.

5. Elastische Verbindung gemäß einem der Patentansprüche 1 bis 4, dadurch gekennzeichnet, daß sie zwei Arme (6, 7) besitzt, die auf den gegenüberliegenden Seiten der Fußplatte längs ihrer Symmetrieachse XX' angebracht sind.

6. Elastische Verbindung gemäß einem der Patentansprüche 1 bis 5, dadurch gekennzeichnet, daß die beiden Arme (8, 9) angenähert werden können, um die Spiele zu absorbieren, die sich beim Zusammenfügen von Antriebswelle und Fußplatte ergeben.

7. Elastische Verbindung gemäß einem der Patentansprüche 1 bis 6, dadurch gekennzeichnet, daß sie zwei elastische Lamellen (14, 15) besitzt, die mit der Fußplatte fest verbunden sind und deren freie Enden an beiden Seiten der Achse XX' angebracht sind.

8. Elastische Verbindung gemäß einem der obengenannten Patentansprüche, dadurch gekennzeichnet, daß die Fußplatte (5) aus elastischem Stahl vom Typ 45S7 hergestellt wird.

## Claims

1. Flexible linkage (1), linking a drive shaft (2) to a driven shaft (3), characterized by the fact that it comprises a virtually plane socket (5), inserted into a recess (4), of the same shape, executed in the driven shaft, the socket having a housing (13), into which the drive shaft is inserted, the flexible linkage comprising, firstly, at least one arm (6), with two branches (8, 9), separated by a slot which is virtually perpendicular to the socket plane, at least one branch being flexible, ensuring constant contact with the recess sides (10, 11) and, secondly, at least one strip (14, 15), in constant contact with the drive shaft, obtained by cutting the actual socket close to the housing (13), thus ensuring that the housing surface is at least partially in contact with the drive shaft, the assembly providing a drive shaft - driven shaft linkage without play.

2. The flexible linkage described in claim 1 characterised by the fact that the slot between the two branches (8, 9) does not extend as far as the actual socket (5).

3. The flexible linkage as in either of claims 1 or 2, characterized by the fact that the free end of the strip (14, 15) is not in contac with the drive shaft (2).

4. The flexible linkage described in any of claims 1 to 3 characterized by the fact that at least one of the branches has a slight bulge (12) which imposes a minimum limit on the proximity of the branches.

5. The flexible linkage as in any of claims 1 to 4 characterized by the fact that it comprises two arms (6, 7), on either side of the socket, along its centre-line X-X'.

6. The flexible linkage as in any of claims 1 to 5, characterized by the fact that both branches (8, 9) are flexible inwards, to absorb the assembly clearance between the driven shaft and the socket.

7. The flexible linkage as in any of claims 1 to 6 characterized by the fact that it comprises two flexible strips (14, 15), integral with the socket, the free ends of which are located on either side of centre-line X-X'.

8. The flexible linkage described in any of the above claims characterized by the fact that the socket is produced in grade 45S7 spring steel.
